# EUROPÄISCHE PATENTSCHRIFT

(11) **EP 1 610 035 B1**
(45) Veröffentlichungstag und Bekanntmachung des Hinweises auf die Patenterteilung: **20.06.2007**
(21) Anmeldenummer: 04450212.8
(22) Anmeldetag: 18.11.2004
(51) Int. Cl.: F16H 55/50

(54) **Seilscheibe für eine Seilbahnanlage**
Sheave wheel for cableway installation
Poulie à câble pour installation de téléphérage

(30) Priorität: 24.06.2004 AT 10742004
(43) Veröffentlichungstag der Anmeldung: 28.12.2005
(73) Patentinhaber: Innova Patent GmbH, 1060 Wien (AT)
(72) Erfinder: Häfele, Norbert, 6858 Schwarzach (AT)
(74) Vertreter: Atzwanger, Richard

(56) Entgegenhaltungen:
- EP-A- 1 099 880
- EP-A- 1 584 845
- WO-A-02/12756
- DE-C- 274 439
- JP-A- 62 188 851

## Beschreibung

Die gegenständliche Erfindung betrifft eine Seilscheibe für Seilbahnanlagen mit einer Nabe, mit einer von der Nabe ausgehenden, gegebenenfalls speichenförmig ausgebildeten Scheibenfläche, weiters mit einer an deren Umfang angeordneten Seilrille und mit in der Scheibenfläche vorgesehenen Befestigungseinrichtungen, mittels welcher mindestens drei Seilscheibenteile miteinander zur vollständigen Seilscheibe starr verbindbar sind, wobei sich die mindestens zwei Teilungslinien außerhalb der Nabe befinden, und weiters ein erster, die Nabe enthaltender Seilscheibenteil vorgesehen ist, welcher den mittleren Bereich der Seilscheibe bildet, sowie mindestens zwei weitere, in ihrer Größe gleich ausgebildete zweite Seilscheibenteile vorgesehen sind, welche den ersten Seilscheibenteil radial umschließen, welche mit dem ersten Seilscheibenteil und mit den anliegenden, mindestens zwei zweiten Seilscheibenteilen starr verbunden sind und durch welche die Seilrille gebildet ist

Aus der gattungsgemäßen EP 1099880 B1 ist eine Seilscheibe für Seilbahnanlagen bekannt, welche aus drei miteinander starr verbundenen Seilscheibenteilen besteht. Durch die Unterteilung der Seilscheibe ist es möglich, auch Seilscheiben mit sehr großen Durchmessern in Containern, welche genormte Größen aufweisen, zu transportieren. Maßgeblich für diese konstruktive Gestaltung ist es, dass sich die Teilungslinien außerhalb der Nabe befinden.
Da jedoch bei dieser bekannten Seilscheibe zwei zueinander parallele Teilungslinien vorgesehen sind, weisen die drei Seilscheibenteile solche Längen auf, welche dem Durchmesser der Seilscheibe gleich bzw. nur etwas geringer als derselbe sind.

Aus der EP A1 1584845, die ein Dokument gemäß Artikel 54 (3) EPÜ darstellt, ist weiters eine mehrere Teile aufweisende Seilscheibe bekannt, welche aus einem die Nabe enthaltenden ersten Seilscheibenteil und mehreren zweiten, mit diesem und miteinander durch Verschraubung verbundenen äußeren Scheibenteilen besteht. Dabei sind die radialen Streben der zweiten Seilscheibenteile am Außenumfang des ersten Seilscheibenteiles befestigt.

Die gegenständliche Erfindung betrifft eine Weiterentwicklung der aus der EP 1099880 B1 bekannten Seilscheibe einerseits dahingehend, dass die Teilungslinien so verlaufen, dass die einzelnen Seilscheibenteile gegenüber dem Durchmesser der vollständigen Seilscheibe wesentlich geringere Längen bzw. Breiten aufweisen. Andererseits wird ein Bausatz für die Herstellung von Seilscheiben geschaffen, durch welchen Seilscheiben mit unterschiedlichen Durchmessern herstellbar sind.

Diese Aufgaben werden erfindungsgemäß dadurch gelöst, dass der erste Seilscheibenteil mit mindestens zwei radial abragenden Stegen ausgebildet ist, welche gleiche Längen aufweisen und welche an ihren freien Enden mit im rechten Winkel zu den Stegen ausgerichteten Flanschen ausgebildet sind, an welchen die zweiten Scheibenteile befestigt sind.

Vorzugsweise ist der erste Seilscheibenteil mit radial abragenden Stegen ausgebildet, deren Anzahl der Anzahl der zweiten Seilscheibenteile gleich ist und sind die zweiten Seilscheibenteile mit in Fortsetzung der radialen Stege des ersten Seilscheibenteiles verlaufenden, gleichfalls radial ausgerichteten Stegen und weiters mit kreisabschnittförmig verlaufenden peripheren Stegen, ausgebildet, deren aneinander liegende freien Enden miteinander starr verbunden sind.
Weiters kann der erste Seilscheibenteil an den freien Enden der radial nach außen abragenden Stege mit Flanschen ausgebildet sein, welche zur Nabe kreissymmetrisch angeordnet sind und können die zweiten Seilscheibenteile mit den Flanschen des ersten Seilscheibenteiles zugeordneten Flanschen ausgebildet sein.

Vorzugsweise sind weiters die zweiten Seilscheibenteile mit dem ersten Seilscheibenteil längs Ebenen verbunden, welche zu der die Nabe durchsetzenden Symmetrieebene des jeweiligen zweiten Scheibenteils einen rechten Winkel einschließen und sind die aneinander liegenden zweiten Seilscheibenteile miteinander längs gerader Ebenen verbunden, welche die Nabe durchsetzen. Insbesondere ist die erfindungsgemäße Seilscheibe mit vier zweiten Seilscheibenteilen ausgebildet.

Ein erfindungsgemäßer Bausatz zur Herstellung von Seilscheiben mit unterschiedlichen Durchmessern kann einen ersten, die Nabe aufweisenden ersten Seilscheibenteil und mindestens zwei Gruppen von die Seilrille aufweisenden zweiten Seilscheibenteilen enthalten, wobei die zweiten Seilscheibenteile der unterschiedlichen Gruppen unterschiedliche radiale Längen aufweisen.

Der Gegenstand der Erfindung ist nachstehend anhand von zwei in der Zeichnung dargestellten Ausführungsbeispielen näher erläutert. Es zeigen :
- Fig. 1: eine erste Ausführungsform einer erfindungsgemäßen Seilscheibe, in Draufsicht;
- Fig. 1a: die Seilscheibe gemäß Fig. 1, im Schnitt nach der Linie II-II der Fig. 1 ;
- Fig.2: eine zweite Ausführungsform einer erfindungsgemäßen Seilscheibe, in Draufsicht und in gegenüber Fig. 1 etwas vergrößertem Maßstab;
- Fig.3: ein Detail der Seilscheiben gemäß den Fig.1 und 2, in Draufsicht ; und
- Fig.4: ein Detail der Seilscheiben gemäß den Fig.1 und 2, in Ansicht nach der Linie IV-IV der Fig.3.

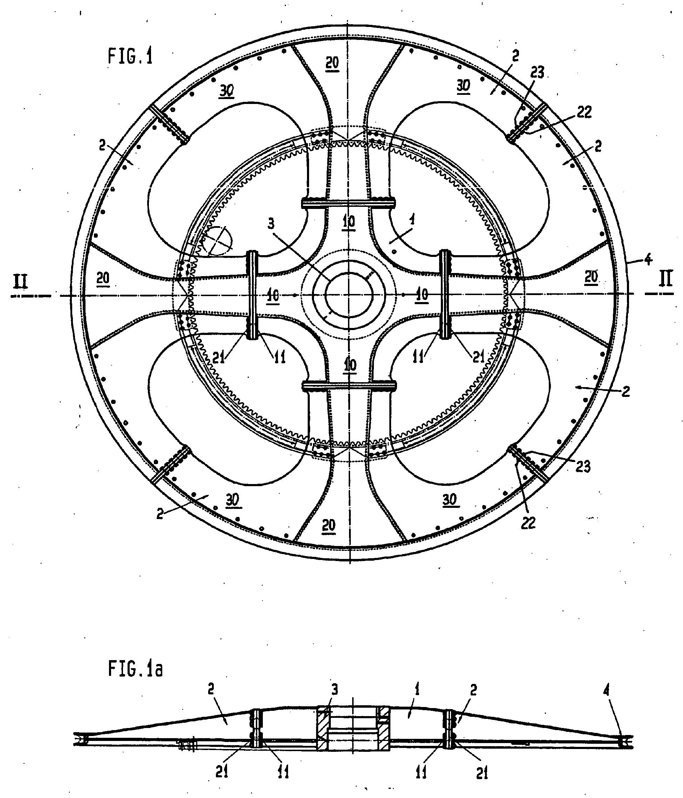

Die in den Fig. 1 und Fig. 1a dargestellte Seilscheibe besteht aus einem mittleren ersten Seilscheibenteil 1 und aus vier rings um den ersten Seilscheibenteil 1 angeordneten, kreissektorförmigen zweiten Seilscheibenteilen 2, welche mit dem ersten Seilscheibenteil 1 und miteinander mittels einander zugeordneter Flanschen 11 und 21 bzw. 22 und 23 starr verbunden sind. Im Zentrum des ersten Seilscheibenteils 1 befindet sich eine Nabe 3 und am äußeren Rand der zweiten Seilscheibenteile 2 befindet sich eine Seilrille 4.

Der erste Seilscheibenteil 1 ist mit vier radial abragenden Stegen 10 ausgebildet, an deren freien Enden sich die Flansche 11 befinden. Die zweiten Seilscheibenteile 2 sind mit in Fortsetzung der Stege 10 liegenden radialen Stegen 20 ausgebildet, an deren inneren Enden sich die Flansche 21 befinden und an welche kreisabschnittsförmige Stege 30 anschließen, an deren freien Enden sich die Flansche 22 und 23 befinden, mittels welcher die zweiten Seilscheibenteile 2 miteinander zur Seilscheibe starr verbunden sind.

Der Vorteil dieser konstruktiven Gestaltung besteht einerseits darin, dass die in der Fabrik hergestellten Seilscheibenteile solche Größen aufweisen, welche in Containern transportiert werden können, wobei sie an demjenigen Ort, an welchem sie für die Seilbahnanlage benötigt werden, zur vollständigen Seilscheibe zusammengesetzt werden können. Ein weiterer Vorteil besteht andererseits darin, dass für Seilscheiben mit unterschiedlichen Durchmessern ein mittlerer erster Seilscheibenteil verwendet werden kann, an welchen radial außen befindliche, zweite Seilscheibenteile mit unterschiedlichen radialen Dimensionen angefügt werden können.

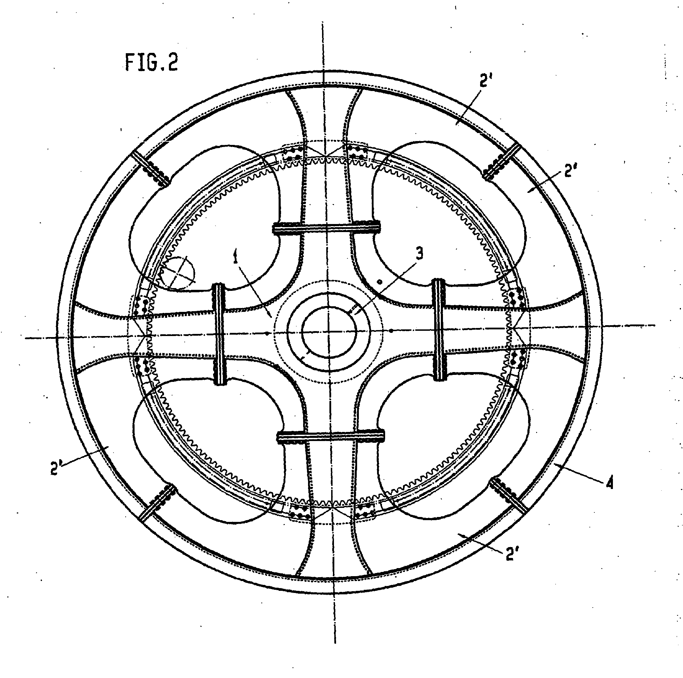

Es wird hiezu auf das in Fig.2 dargestellte Ausführungsbeispiel verwiesen, in welchem der mittlere erste Seilscheibenteil 1 die gleiche Größe wie der erste Seilscheibenteil 1 der Seilscheibe gemäß Fig.1 aufweist, an welchen jedoch vier zweite Seilscheibenteile 2' angefügt sind, welche geringere radiale Größen aufweisen, wodurch eine Seilscheibe mit einem gegenüber der Seilscheibe gemäß Fig. 1 verminderten Durchmesser hergestellt wird. Die zweiten Seilscheibenteile 2' bilden die Seilrille 4. In analoger Weise kann auch eine Seilscheibe mit einem gegenüber Fig. 1 vergrößerten Durchmesser hergestellt werden.

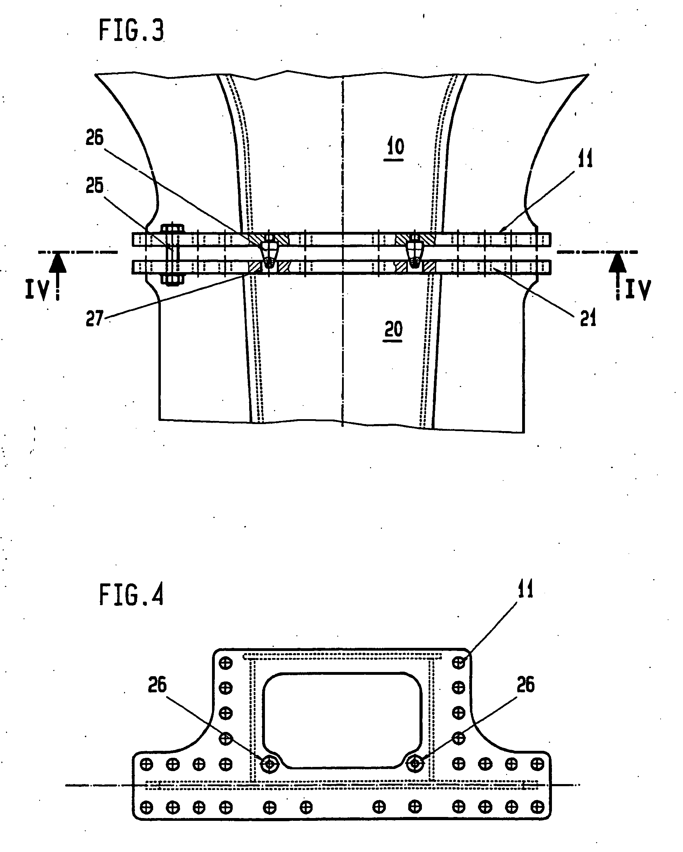

Wie dies aus den Fig.3 und 4 ersichtlich ist, sind die Flansche 11 und 21 mittels einer Vielzahl von Schraubbolzen 25 miteinander verbunden. Zudem ragen von den Flanschen 11 konische Führungsbolzen 26 ab, welchen in den Flanschen 21 Führungsbohrungen 27 zugeordnet sind, wodurch die Montage der äußeren Seilscheibenteile 2 am mittleren Seilscheibenteil 1 erleichtert wird.

Derartige Seilscheiben können mit sehr großen Durchmessern vorgefertigt und zum Ort der Seilbahnanlage transportiert werden, wo sie zur Seilscheibe zusammengebaut werden. Da sich die Teilungslinien der einzelnen Seilscheibenteile 1 und 2 außerhalb der Nabe 3 befinden, wird die Nabe 3 in ihrer Funktionsfähigkeit nicht beeinträchtigt. Da für Seilscheiben mit unterschiedlichen Durchmessern ein mittlerer Seilscheibenteil 1 verwendet wird, welcher bei allen Seilscheiben die gleiche Größe aufweist, ist ein Baukastensystem geschaffen, wodurch die Kosten in der Erzeugung vermindert werden.

## Patentansprüche

1. Seilscheibe für Seilbahnanlagen mit einer Nabe (3), mit einer von der Nabe (3) ausgehenden, gegebenenfalls speichenförmig ausgebildeten Scheibenfläche (1,2), weiters mit einer an deren Umfang angeordneten Seilrille (4) und mit in der Scheibenfläche vorgesehenen Befestigungseinrichtungen (11,21; 22,23), mittels welcher mindestens drei Seilscheibenteile (1, 2) miteinander zur vollständigen Seilscheibe starr verbindbar sind, wobei sich die mindestens zwei Teilungslinien außerhalb der Nabe (3) befinden, und weiters ein erster, die Nabe (3) enthaltender Seilscheibenteil (1) vorgesehen ist, welcher den mittleren Bereich der Seilscheibe bildet, sowie mindestens zwei weitere, in ihrer Größe gleich ausgebildete zweite Seilscheibenteile (2) vorgesehen sind, welche mit dem ersten Seilscheibenteil (1) und mit den anliegenden, mindestens zwei zweiten Seilscheibenteilen (2) starr verbunden sind und durch welche die Seilrille (4) gebildet ist, wobei der erste Seilscheibenteil (1) mit mindestens zwei radial abragenden Stegen (10) ausgebildet ist, welche gleiche Längen aufweisen und welche an ihren freien Enden mit im rechten Winkel zu den Stegen (10) ausgerichteten Flanschen (11) ausgebildet sind, an welchen die zweiten Scheibenteile (2) befestigt sind, **dadurch gekennzeichnet, dass** die zweiten Scheibenteile (2) den ersten Seilscheibenteil (1) radial umschließen.

2. Seilscheibe nach Patentanspruch 1, **dadurch gekennzeichnet, dass** die Anzahl der radial abragenden Stegen (10) mit denen der erste Scheibenteil (1) ausgebildet ist, der Anzahl der zweiten Seilscheibenteile (2) gleich ist und dass die zweiten Seilscheibenteile (2) mit in Fortsetzung der radialen Stege (10) des ersten Seilscheibenteiles (1) verlaufenden, gleichfalls radial ausgerichteten Stegen (20) und weiters mit kreisabschnittförmig verlaufenden peripheren Stegen (30), ausgebildet sind, deren aneinander liegenden freien Enden miteinander starr verbunden sind.

3. Seilscheibe nach einem der Patentansprüche 1 und 2, **dadurch gekennzeichnet, dass** der erste Seilscheibenteil (1) an den freien Enden der radial nach außen abragenden Stege mit Flanschen (11) ausgebildet ist, welche zur Nabe (3) kreissymmetrisch angeordnet sind und dass die zweiten Seilscheibenteile (2) mit den Flanschen (11) des ersten Seilscheibenteiles (1) zugeordneten Flanschen (21) ausgebildet sind.

4. Seilscheibe nach einem der Patentansprüche 1 bis 3, **dadurch gekennzeichnet, dass** die zweiten Seilscheibenteile (2) mit dem ersten Seilscheibenteil (1) längs Ebenen verbunden sind, welche zu der die Nabe (3) durchsetzenden Symmetrieebene des jeweiligen zweiten Seilscheibenteils (2) einen rechten Winkel einschließen und dass die aneinander liegenden zweiten Seilscheibenteile (2) miteinander längs gerader Ebenen verbunden sind, welche die Nabe (3) durchsetzen.

5. Seilscheibe nach einem der Patentansprüche 1 bis 4, **dadurch gekennzeichnet, dass** sie mit vier zweiten Seilscheibenteilen (2) ausgebildet ist.

6. Bausatz zur Herstellung von Seilscheiben mit unterschiedlichen Durchmessern nach einem der Patentansprüche 1 bis 5, **dadurch gekennzeichnet, dass** er einen ersten, die Nabe (3) aufweisenden Seilscheibenteil (1) und mindestens zwei Gruppen von die Seilrille (4) aufweisenden zweiten Seilscheibenteilen (2, 2') enthält, wobei die zweiten Seilscheibenteile (2, 2') der unterschiedlichen Gruppen unterschiedliche radiale Längen aufweisen.

## Claims

1. A cable sheave for cableway installations with a hub (3), with a sheave face (1, 2) extending from the hub (3) and optionally constructed in the form of spokes, additionally with a cable groove (4) arranged at the circumference thereof and with fastening means (11, 21; 22, 23) provided in the sheave face, by means of which at least three cable sheave parts (1, 2) may be joined rigidly together to form the complete cable sheave, the at least two dividing lines being located outside the hub (3), and additionally a first cable sheave part (1) containing the hub (3) is provided, which forms the central area of the cable sheave, and at least two further, identically sized, second cable sheave parts (2) are provided, which are rigidly joined to the first cable sheave part (1) and to the adjacent, at least two second cable sheave parts (2) and by which the cable groove (4) is formed, the first cable sheave part (1) being constructed with at least two radially projecting webs (10), which exhibit identical lengths and which are constructed at their free ends with flanges (11) oriented at right angles to the webs (10), to which flanges (11) the second cable sheave parts (2) are attached, **characterised in that** the second cable sheave parts (2) radially surround the first cable sheave part (1).

2. A cable sheave according to claim 1, **characterised in that** the number of radially projecting webs (10) with which the first sheave part (1) is constructed is equal to the number of second cable sheave parts (2) and **in that** the second cable sheave parts (2) are constructed with likewise radially oriented webs (20) extending in continuation of the radial webs (10) of the first cable sheave part (1) and additionally with peripheral webs (30) extending in the form of segments of circles, the mutually adjacent free ends of which webs (30) are joined rigidly together.

3. A cable sheave according to either one of claims 1 and 2, **characterised in that** the first cable sheave part (1) is constructed at the free ends of the radially outwardly projecting webs with flanges (11) which are arranged in circular-symmetrical manner relative to the hub (3), and **in that** the second cable sheave parts (2) are constructed with flanges (21) assigned to the flanges (11) of the first cable sheave part (1).

4. A cable sheave according to any one of claims 1 to 3, **characterised in that** the second cable sheave parts (2) are joined to the first cable sheave part (1) along planes which form a right angle with the plane of symmetry, passing through the hub (3), of the respective second cable sheave part (2), and **in that** the mutually adjacent second cable sheave parts (2) are joined together along straight planes, which pass through the hub (3).

5. A cable sheave according to any one of claims 1 to 4, **characterised in that** it is constructed with four second cable sheave parts (2).

6. A kit for producing cable sheaves with different diameters according to any one of claims 1 to 5, **characterised in that** it contains a first cable sheave part (1) comprising the hub (3) and at least two groups of second cable sheave parts (2, 2') comprising the cable groove (4), the second cable sheave parts (2, 2') of the different groups exhibiting different radial lengths.

## Revendications

1. Poulie à câble pour téléphériques, comportant un moyeu (3), une surface de poulie (1, 2) qui part du moyeu (3) et qui a éventuellement la forme de rayons, une gorge (4) qui est disposée sur la circonférence de ladite surface de poulie (1, 2) et des dispositifs de fixation (11, 21 ; 22, 23) qui sont prévus dans la surface de poulie (1, 2) et grâce auxquels au moins trois parties de poulie (1, 2) peuvent être reliées rigidement pour former la poulie complète, étant précisé que les deux lignes de séparation, ou plus, se trouvent en dehors du moyeu (3) et qu'il est prévu une première partie de poulie (1) qui contient le moyeu (3) et qui forme la zone centrale de la poulie, et au moins deux secondes parties de poulie (2) de même taille qui sont reliées rigidement à la première partie de poulie (1) et aux autres secondes parties de poulies (2) voisines et grâce auxquelles est définie la gorge (4), la première partie de poulie (1) comportant au moins deux branches (10) dépassant radialement qui ont la même longueur et qui sont pourvues à leurs extrémités libres de brides (11) dirigées à angle droit par rapport auxdites branches (10) et auxquelles sont fixées les secondes parties de poulie (2),
**caractérisée en ce que** les secondes parties de poulie (2) entourent radialement la première partie de poulie (1).

2. Poulie à câble selon la revendication 1, **caractérisée en ce que** le nombre de branches (10) dépassant radialement qui sont formées sur la première partie de poulie (1) est égal au nombre de secondes parties de poulie (2) et **en ce que** les secondes parties de poulie (2) comportent des branches (20) qui se trouvent dans le prolongement des branches radiales (10) de la première partie de poulie (1) et qui sont elles aussi orientées radialement, ainsi que des branches périphériques (30) qui ont la forme de segments de cercle et dont les extrémités libres appliquées les unes contre les autres sont reliées rigidement.

3. Poulie à câble selon la revendication 1 ou 2, **caractérisée en ce que** la première partie de poulie (1) comporte, aux extrémités libres de ses branches dépassant radialement vers l'extérieur, des brides (11) qui sont disposées suivant une symétrie circulaire par rapport au moyeu (3), et **en ce que** les secondes parties de poulie (2) comportent des brides (21) associées aux brides (11) de la première partie de poulie (1).

4. Poulie à câble selon l'une des revendications 1 à 3, **caractérisée en ce que** les secondes parties de poulie (2) sont reliées à la première partie de poulie (1) le long de plans qui définissent un angle droit avec le plan de symétrie de la seconde partie (2) qui traverse le moyeu (3), et **en ce que** les secondes parties de poulie (2) appliquées l'une contre l'autre sont reliées le long de plans droits qui traversent le moyeu (3).

5. Poulie à câble selon l'une des revendications 1 à 4, **caractérisée en ce qu'**elle comporte quatre secondes parties de poulie (2).

6. Ensemble de construction pour la fabrication de poulies à câbles de diamètres différents selon l'une des revendications 1 à 5, **caractérisé en ce qu'**il contient une première partie de poulie (1) comportant le moyeu (3), et au moins deux groupes de secondes parties de poulie (2, 2') comportant la gorge (4), les secondes parties de poulie (2, 2') des différents groupes présentant des longueurs radiales différentes.
